# FASCICULE DE BREVET EUROPEEN

(11) **EP 2 440 598 B1**
(45) Date de publication et mention de la délivrance du brevet: **27.04.2016**
(21) Numéro de dépôt: 10724764.5
(22) Date de dépôt: 04.06.2010
(51) Int. Cl.: C08G 69/26, C08G 69/28, C08G 69/36, C08L 77/06, B29C 45/00, B29C 47/00, B29C 49/04, C08L 51/06

(54) **POLYAMIDE DE HAUTE VISCOSITE**
HOCHVISKOSES POLYAMID
HIGH-VISCOSITY POLYAMIDE

(30) Priorité: 12.06.2009 FR 0953921
(43) Date de publication de la demande: 18.04.2012
(73) Titulaire: Rhodia Opérations, 93306 Aubervilliers (FR)
(72) Inventeur: ZAHER, Damien, I-26841 Casalpusterlengo (lodi) (IT); GUAITA, Cesare, I-21049 Tradate (IT)
(74) Mandataire: Benvenuti, Federica
(86) Numéro de dépôt international: PCT/EP2010/057821
(87) Numéro de publication internationale: WO 2010/142605

(56) Documents cités:
- EP-A- 0 364 376
- EP-A- 0 774 480
- WO-A-94/13740
- FR-A- 2 921 662
- US-A- 5 322 923

## Description

La présente invention concerne un polyamide et un procédé de fabrication de celui-ci et des compositions le contenant. Elle concerne plus particulièrement un polyamide de haute viscosité obtenu par polymérisation de monomères diacides et diamines en présence de composés multifonctionnels et éventuellement monofonctionnels. Ce polyamide est notamment utile pour la fabrication de compositions destinées, par exemple, à être moulées ou soufflées.

Les compositions thermoplastiques à base de polyamide sont des matières premières susceptibles d'être transformées de diverses manières, notamment par moulage ou soufflage. Les polyamides généralement utilisés sont des polyamides linéaires aliphatiques, aromatiques ou semi-aromatiques.

Les procédés de mise en forme de ces compositions, comme par exemple, l'extrusion-soufflage requièrent des compositions présentant une viscosité en milieu fondu élevée pour que la pièce extrudée avant le soufflage ne se déforme pas ou faiblement sous l'effet de son propre poids. Toutefois, les propriétés mécaniques, élastiques et de résistance aux chocs des pièces ne doivent pas être affectées ou faiblement. Certaines solutions ont été proposées telles que l'utilisation de polyamides linéaires de haute viscosité obtenus par post-condensation en milieu solide, ou par addition d'agents d'extension de chaînes. Toutefois, ces solutions sont souvent difficiles à mettre en oeuvre ou altèrent certaines propriétés des pièces obtenues. Par ailleurs, il est préférable d'utiliser des procédés de polymérisations classiques industriels pour fabriquer des polyamides de hautes viscosités, sans les modifier drastiquement.

Les documents suivants portent sur des compositions de polyamides. US 5,322,923 décrit des copolyamides semi-aromatique et semi-cristallins comprenant de l'acide téréphtalique et un mélange d'alkylpentaméthylènediamine et d'héxaméthylènediamine. US5,760,163 (équivalent à EP 0 774 480) décrit un procédé pour obtenir des polyamide branchés. EP 0 364 376 porte sur un procédé de préparation de polyamides amorphes à base d'acides dicarboxyliques aromatiques et de diamines aliphatiques. La demande de brevet français FR 2 921 029 concerne un polyamide de haute fluidité obtenu par polymérisation de monomères diacides et diamines en présence de composés multifonctionnels. Enfin, la demande PCT WO 94/13740 porte sur un procédé de soufflage par extrusion de compositions de polyamides.

La demanderesse a mis au point un polyamide modifié par des composés multifonctionnels et éventuellement difonctionnels et/ou monofonctionnels présentant une viscosité augmentée et des propriétés mécaniques équivalentes ou supérieures, par rapport aux polyamides classiques linéaires. Ces polyamides modifiés sont obtenus de façon simples par des procédés de polymérisation tout à fait classique sans procéder obligatoirement a des étapes de post-condensation ultérieures.

Un tel polyamide est obtenu par polymérisation de monomères diacides carboxyliques et diamines, d'un composé multifonctionnel présentant au moins 3 fonctions amines ou acides susceptibles de former une liaison amide avec les fonctions desdits monomères diacides carboxyliques et diamines, et éventuellement de composés difonctionnels et/ou monofonctionnels présentant des fonctions acides ou amines, susceptibles de former une fonction amide avec les fonctions desdits monomères diacides carboxyliques et diamines. Le procédé de polymérisation est classique et correspond à celui habituellement utilisé pour la polymérisation de polyamide à base de monomères diacides et diamines, tel que le polyamide 66.

La présente invention a ainsi pour premier objet un polyamide branché obtenu par polymérisation en présence d'au moins :
- des monomères (a) diacides carboxyliques de type AA et des monomères diamines de type BB, ou leurs sels ;
- un composé multifonctionnel (b) comprenant au moins 3 fonctions A ou B ;
les fonctions A et B étant des fonctions susceptibles de réagir entre elles pour former une liaison amide ;
le polyamide obtenu présentant une différence en valeur absolue ΔGT entre ses groupements terminaux comprise entre 30 et 150 ; et
le polyamide présentant un IV compris entre 150 et 300 mL/g, préférentiellement de 160 à 250 mL/g, selon la norme ISO 307.

Le polyamide modifié selon l'invention présente une forte viscosité et d'excellentes propriétés mécaniques tout en évitant la gélification en utilisant un procédé classique de polymérisation. Ce polyamide présente par ailleurs une excellente capacité à la compatibilisation en présence d'agents modificateurs de chocs présentant des fonctions susceptibles de réagir avec les fonctions du polyamide.

Il est bien entendu que la différence entre les groupements terminaux ΔGT est à prendre dans sa valeur absolue, c'est-à-dire toujours positive.

Les fonctions A et B sont des fonctions susceptibles de réagir entre elles pour former une liaison amide. La fonction A peut être une fonction acide carboxylique ou un de ses sels ou encore une fonction précurseur de fonction A capable de générer une fonction A dans le milieu de polymérisation. On peut citer notamment les fonctions nitriles, amides primaires, anhydrides, ou esters. La fonction B peut être une fonction amine primaire ou secondaire ou un de ses sels ou encore une fonction précurseur de fonction B capable de générer une fonction B dans le milieu de polymérisation. On peut notamment citer les fonctions isocyanates ou carbamates.

Les quantités de groupements terminaux amines et/ou acides sont déterminées par dosages potentiométriques après dissolution du polyamide. Une méthode est par exemple décrite dans "Encyclopedia of Industrial Chemical Analysis", volume 17, page 293, 1973.

Il apparaît ainsi que selon l'invention le polyamide modifié obtenu présente une valeur de ΔGT comprise entre 30 et 150, préférentiellement entre 35 et 90. Pour obtenir un tel ΔGT, un homme du métier est parfaitement à même d'ajouter à la polymérisation des composés, notamment des monomères diacide carboxylique ou diamine, et/ou des monomères monoacide carboxylique et monoamine, au besoin. Bien sûr, selon les procédés de polymérisation mis en oeuvre et la perte de monomères volatils qui en résulte, un homme du métier connaissant son installation sera à même de faire les rectifications nécessaires au niveau des proportions en monomères et composés (a) et (b) introduits pour obtenir le ΔGT souhaité. La différence entre les groupements terminaux ΔGT peut notamment se calculer en ajoutant le ΔGT induit par l'ajout des composés (a) et (b) et le ΔGT calculé ou mesuré par la perte des composés volatils dans le procédé de polymérisation.

Il en est de même pour l'obtention de l'IV désiré comprise entre 130 et 300. On peut parfaitement procéder à différentes mesures d'IV sur diverses formulations pour obtenir le polyamide présentant l'IV souhaité.

On peut parfaitement ajouter par exemple en polymérisation une quantité équimolaire de diacide carboxylique et de diamine, et une certaine proportion de diacide carboxylique ou de diamine, de nature similaire ou différente.

Par nombre de moles de monomères constitutifs du polyamide, on entend le nombre de moles total des motifs monomères et des motifs correspondants aux autres constituants dudit polyamide, c'est-à-dire le nombre de moles de motifs des monomères (a) diacides carboxyliques et diamines, le nombre de moles de composés (b) et éventuellement nombre de moles d'autres composés ou monomères. Le pourcentage molaire d'un composé correspond au nombre de moles de ce composé par rapport au nombre de moles de monomères constitutifs du polyamide.

Préférentiellement, le polyamide selon l'invention est obtenu par polymérisation des monomères diacides carboxyliques et diamines, ou leurs sels, et un seul type de composé multifonctionnel (b).

Les monomères (a) diacides carboxyliques et diamines sont notamment ceux classiquement utilisés pour la fabrication :
- des polyamides aliphatiques, de type PA 6.6, PA 6.10, PA 6.12, PA 12.12, PA 4.6,
- des polyamides semi-aromatiques, comme le polyadipate de m-xylylènediamine (MXD6), les polytéréphtalamides, tel que les polyamides 6.T, 9.T et 6.6/6T, les polyisophtalamides, tel que les polyamides 6.I et 6.6/6I,
- les polyaramides,
- ou leurs copolymères.

Ces monomères diacides carboxyliques et/ou diamines peuvent être aliphatiques, notamment à chaîne linéaire, ramifiée ou cyclique, ou aromatiques.

Comme monomère diacide carboxylique, on peut notamment citer les diacides carboxyliques aliphatiques ou aromatiques ayant de 4 à 12 atomes de carbone, tels que l'acide adipique, l'acide téréphtalique, l'acide isophtalique, l'acide pimélique, l'acide subérique, l'acide décanedioïque, l'acide dodécanedioïque.

Comme monomère diamine, on peut notamment citer les diamines aliphatiques, éventuellement cycloaliphatiques, ou aromatiques ayant de 4 à 12 atomes de carbone, telles que l'hexaméthylènediamine, la butanediamine, la m-xylylène diamine, l'isophoronediamine, la 3,3',5-triméthyl hexaméthylènediamine, et la méthylpentaméthylènediamine.

Les monomères peuvent être éventuellement combinés sous forme de sels des monomères diacides carboxyliques et diamines.

On préfère notamment utiliser selon la présente invention les monomères constitutifs du polyamide 66, qui sont l'acide adipique, l'hexaméthylènediamine, ou leur sel, tel que l'adipate d'hexaméthylènediammonium également appelé sel Nylon ou sel N.

Le polyamide modifié selon l'invention peut comprendre un ou plusieurs diacides carboxyliques et une ou plusieurs diamines, de types différents.

Le composé multifonctionnel (b) selon l'invention comprend au moins 3 fonctions amines ou acides. Ce composé présente avantageusement 3 fonctions acides ou amines. Ce composé présente préférentiellement 3 fonctions amines.

Ce composé multifonctionnel est généralement un composé hydrocarboné comprenant de 1 à 100 atomes de carbone, aliphatique, cycloaliphatique et/ou aromatique et pouvant éventuellement comprendre un ou plusieurs hétéroatomes. Les hétéroatomes peuvent être O, S, N ou P.

Le composé multifonctionnel peut notamment comprendre un cyclohexyle, un cyclohexanoyle, un benzyle, un naphtyle, un anthracényle, un biphényle, un triphényle, une pyridine, une bipyridine, un pyrrole, un indole, un furane, un thiophène, une purine, une quinoléine, un phénanthrène, une porphyrine, une phtalocyanine, une naphtalocyanine, une 1,3,5-triazine, une 1,4-diazine, une 2,3,5,6-tétraéthylpipérazine, une pipérazine, et/ou un tétrathiafulvalène.

A titre d'exemple de composés multifonctionnels portant des fonctions amines, on peut notamment citer les nitrilotrialkylamines, en particulier la nitrilotriéthylamine, les dialkylènetriamines, en particulier la diéthylènetriamine, la bishexaméthylènetriamine, la 4-aminométhyle-1,8-octanediamine, la mélamine, et les polyalkylènetriamines, tels que par exemple les Jeffamines T® de la société Huntsman, notamment la Jeffamine T403® (polyoxypropylènetriamine).

A titre d'exemple de composé multifonctionnels (b) portant des fonctions précurseurs de fonction B de type amine, on peut notamment citer les isocyanates ou carbamates des composés polyamines cités précédemment.

A titre d'exemple de composés multifonctionnels (b) portant des fonctions acides carboxyliques, on peut notamment citer la 2,2,6,6-tétra-(β-carboxyéthyl)cyclohexanone, le diaminopropane - N,N,N',N' acide tétraacétique, l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

A titre d'exemple de composé multifonctionnels (b) portant des fonctions précurseurs de fonction A de type acide carboxylique, on peut notamment citer les nitriles, amides primaires, anhydrides, ou esters des composés polyacides cités précédemment.

Des exemples de composés multifonctionnels pouvant convenir sont notamment cités dans les brevets US5346984, US5959069, WO9635739 et EP672703.

Préférentiellement, on utilise un composé multifonctionnel (b) comprenant 3 fonctions B.

Le polyamide branché de l'invention peut être obtenu par polymérisation en présence de 0,05 à 0,4 % molaire d'un composé multifonctionnel (b) comprenant au moins 3 fonctions A ou B, par rapport au nombre de moles de monomères constitutifs du polyamide.

Le polyamide selon l'invention peut également être formé en utilisant des composés monofonctionnels de type monoamine ou monoacide carboxylique. Le composé monofonctionnel est préférentiellement choisi dans le groupe comprenant : la n-hexadécylamine, la n-octadécylamine et la n-dodécylamine, l'acide acétique, l'acide laurique, la benzylamine, l'acide benzoïque, l'acide propionique et la 4-amino-2,2,6,6-tétraméthylpipéridine.

On peut également ajouter aux monomères diacides carboxyliques et diamines, des aminoacides ou leurs lactames, tel que le caprolactame par exemple. On peut notamment ajouter au milieu réactionnel de 1 à 25 % en moles d'aminoacides ou lactames par rapport au nombre de moles de monomères constitutifs du polyamide, préférentiellement de 2 à 15 % en moles.

La polymérisation du procédé de l'invention est notamment réalisée selon les conditions opératoires classiques de polymérisation des diacides carboxyliques et diamines, quand celle-ci est réalisée en absence des composés multifonctionnels.

Un tel procédé de polymérisation peut comprendre brièvement :
- un chauffage sous agitation et sous pression du mélange des monomères et composés multifonctionnels,
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

On peut parfaitement conduire la polymérisation jusqu'à l'obtention de l'équilibre thermodynamique du polyamide.

Les composés multifonctionnels et éventuellement monofonctionnels sont préférentiellement ajoutés au début de la polymérisation. Dans ce cas on procède à la polymérisation d'un mélange des monomères diacides carboxyliques et diamines et des composés multifonctionnels et monofonctionnels.

On peut parfaitement ajouter en début, en cours ou en fin de polymérisation des additifs usuels, tels que par exemple des catalyseurs, comme notamment des catalyseurs phosphorés, des agents anti-mousse, et des agents stabilisants à la lumière ou la chaleur.

En sortie de polymérisation, le polymère peut être refroidi avantageusement par de l'eau, et extrudé, puis coupé pour produire des granulés.

Le procédé de polymérisation selon l'invention peut parfaitement être réalisé en continu ou en discontinu.

Il est également possible d'obtenir les polyamides branchés selon la présente l'invention tels que décrits précédemment en fabriquant d'abord des pré-polymères et conduire ensuite une étape de post-condensation liquide ou solide.

Selon l'invention, le polyamide modifié présente préférentiellement un indice de viscosité en solution compris entre 150 et 300, selon la norme ISO 307 (avec 0,5 % de polymère en solution dans de l'acide formique à 90 %, à une température de 25°C), notamment entre 160 et 250.

La présente invention a également pour objet une composition comprenant au moins le polyamide tel que défini précédemment, et des charges et/ou additifs.

Préférentiellement, le polyamide de l'invention est utilisé en tant que matrice dans cette composition, notamment pour l'obtention d'articles soufflés ou moulés. Une telle composition peut comprendre de 30 à 95 % en poids de polyamide selon l'invention.

Pour améliorer les propriétés mécaniques de cette composition, il peut être avantageux de lui adjoindre au moins une charge de renfort et/ou de remplissage préférentiellement choisie dans le groupe comprenant les charges fibreuses telles que les fibres de verre, les charges minérales telles que les argiles, le kaolin, ou des nanoparticules renforçantes ou en matière thermo-durcissable, et les charges en poudre telles que le talc. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 30 et 60 %.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange à froid ou en fondu.

La composition selon l'invention comprenant le polyamide tel que défini précédemment peut également comprendre au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide.

On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 1 µm dans la matrice.

On utilise préférentiellement des agents modificateur du choc comprenant des groupements fonctionnels réactifs avec le polyamide en fonction de la nature acide ou amine du ΔGT du polyamide. Ainsi par exemple, si le ΔGT est acide on utilisera préférentiellement des groupements fonctionnels réactifs capables de réagir ou d'interagir chimiquement avec les fonctions acides du polyamide, notamment par covalence, interaction ionique ou hydrogène ou liaison de van der Walls. Si par exemple, si le ΔGT est amine on utilisera préférentiellement des groupements fonctionnels réactifs capables de réagir ou d'interagir chimiquement avec les fonctions amines du polyamide, notamment par covalence, interaction ionique ou hydrogène ou liaison de van der Walls.

On utilise préférentiellement des agents modificateurs du choc ayant des groupements fonctionnels réactifs avec le polyamide présentant un ΔGT de nature amine.

Les agents modificateurs du choc peuvent très bien comprendre en eux-mêmes des groupements fonctionnels réactifs avec le polyamide, par exemple pour ce qui concerne l'éthylènes acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser selon l'invention, les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidile méthacrylate. Ces composés selon l'invention peuvent également comprendre en plus d'autres monomères que ceux mentionnés précédemment.

La base du composé modificateur du choc, éventuellement appelé base élastomérique, peut être choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

En plus des groupements listés ci-dessus, ces agent modificateurs de chocs peuvent comprendre également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyls notamment époxy, les esters glycidyls, les anhydrides notamment les anhydrides maléiques, les oxazolines, les maléïmides, ou leurs mélanges.

Des tels groupements fonctionnels sur les élastomères sont par exemple obtenus par utilisation d'un co-monomère lors de la préparation de l'élastomère.

Comme agents modificateurs de chocs comprenant des groupements fonctionnels réactifs avec le polyamide, on peut notamment citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La proportion en poids des agents modificateur du choc dans la composition totale est notamment comprise entre 0,1 et 50 %, préférentiellement entre 0,1 et 20 %, notamment entre 0,1 et 10 %, par rapport au poids total de la composition.

Le polyamide selon l'invention peut également aussi être utilisé comme matrice dans une composition comprenant une forte proportion d'additifs de type mélange maître (masterbatch) destinée à être mélangée à une autre composition thermoplastique.

Le polyamide selon l'invention peut également être utilisé, en tant qu'additif, ou en mélange, notamment pour conférer certaines propriétés, notamment rhéologiques, dans des compositions comprenant en tant que matrice un polymère thermoplastique, notamment un (co)polyamide. On mélange alors généralement le polyamide selon l'invention en fondu avec des polymères thermoplastiques. On peut notamment utiliser une proportion comprise entre 10 et 90 % en poids de (co)polyamide, tel qu'un (co)polyamide linéaire, préférentiellement de 30 à 80 % en poids, par rapport à la proportion totale de (co)polyamide et du polyamide selon l'invention.

Les polyamides ou compositions selon l'invention peuvent être utilisés comme matière première dans le domaine des plastiques techniques. Selon un mode de réalisation usuel, on extrude le polyamide modifié sous forme de joncs, par exemple dans un dispositif d'extrusion bi-vis, qui sont ensuite découpés en granulés. Les articles sont ensuite réalisées par fusion des granulés produits ci-dessus et alimentation de la composition à l'état fondu dans des dispositifs de mise en oeuvre utilisés notamment pour la réalisation de plastiques techniques, tels que des dispositifs de moulage, de moulage par injection, d'extrusion notamment de feuilles ou de films, ou d'extrusion soufflage appropriés. Les domaines d'intérêts sont particulièrement l'automobile, et l'électrique et l'électronique.

La présente invention concerne également un procédé de soufflage par extrusion mettant en oeuvre une composition polyamide comprenant notamment au moins un polyamide branché tel que décrit précédemment et éventuellement au moins un agent modificateur du choc comprenant préférentiellement des groupements fonctionnels réactifs avec le polyamide. L'invention concerne aussi l'utilisation d'un polyamide branché tel que décrit précédemment pour la fabrication d'articles par extrusion soufflage.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Exemple 1 : Fabrication des polymères

La polymérisation est réalisée dans un autoclave chauffé et comprenant des moyens d'agitation, et d'évacuation de sous-produits volatils.

27 kg de sel N (quantité équimolaire d'acide adipique et d'hexaméthylènediamine), éventuellement des quantité variables de bishexaméthylènetriamine (BHT), éventuellement 45 g d'isophorone diamine (IPD) (0,13 % molaire) et 100 g d'antimousse sont ajoutés et mélangés avec 13 kg d'eau déminéralisée, le tout est après introduit dans l'autoclave à une température de 200°C.

Le mélange, mis sous agitation, est porté à un température de 275°C et à une pression de 13 bars. Par la suite, la pression ainsi que la température sont maintenues constantes pendant une heure. Pendant cette étape, de l'eau est évaporée. La pression est ensuite diminuée progressivement sur une période de 1h30min jusqu'à 1 bar absolu et 275°C. Finalement la phase de fission est réalisée sous une pression de 0,75 bar absolu pendant 1 h.

Le polymère fondu est ensuite extrudé sous forme de joncs puis refroidi rapidement à l'eau et découpé en granulés.

Pour certains polymères, l'isophorone diamine (IPD) ajouté afin de compenser les pertes de HMD durant le cycle de polymérisation.

Les polymères sont détaillés au Tableau 1 :

**Tableau 1**

| | **Polymère** | **IPD** | **Catalyseur (ppm / type)** | **BHT Mol (%)** | **IV** | **GTA** | **GTC** | **ΔGT** |
|---|---|---|---|---|---|---|---|---|
| **C1** | PA66* | - | 25 / type 1 | - | 187 | 31 | 67 | 36 |
| **C2** | PA66 + HMD* | - | 27 / type 2 | - | 147 | 83 | 35 | 48 |
| **C3** | PA66 | OUI | - | - | 164 | 55 | 55 | 0 |
| **4** | PA66 | OUI | - | 0,1 | 175 | 73 | 38 | 35 |
| **5** | PA66 | OUI | - | 0,2 | 183 | 88 | 37 | 51 |
| **6** | PA66 | OUI | - | 0,2 | 161 | 94 | 50 | 44 |
| **7** | PA66 | OUI | - | 0,25 | 199 | 99 | 33 | 66 |
| **C8** | PA66/6 90/10 | - | 31 / type 1 | - | 161 | 54 | 63 | 9 |
| **9** | PA66/6 90/10 | OUI | - | 0,2 | 192 | 84 | 34 | 50 |

| | | | | | | | | |
|---|---|---|---|---|---|---|---|---|
| - (1) Indice de viscosité exprimé en mL/g et mesuré à partir d'une solution à 0,5% de polymère dissous dans de l'acide formique à 90%, selon la norme ISO307 - (*) Cycle de polymérisation poussé (cycle de polymérisation plus long ou sous vide/ présence d'une grande quantité de catalyseur) afin d'atteindre une haute viscosité - Catalyseurs : type 1 : NaH₂PO₂.H₂O / type 2 : H₃PO₄ - GTA, GTC et ΔGT sont exprimés en meq/kg | | | | | | | | |

On observe ainsi qu'il n'est pas possible d'atteindre de hautes viscosités en solution ou à l'état fondu sans l'ajout de catalyseurs et/ou un cycle de polymérisation plus poussé (C1). En effet, pour un polymère équilibré et dans un cycle de polymérisation normal (C3), où l'on devrait obtenir une monté de viscosité optimale, une viscosité de seulement 164 mL/g est obtenue. On observe également qu'il est encore plus difficile d'obtenir de haute viscosité avec une différence de GT de l'ordre de 40-50 meq/kg (C2). A contrario, il est parfaitement possible d'obtenir des polyamides présentant les caractéristiques désirées en utilisant des composés multifonctionnels selon l'invention, avec des cycles de polymérisation usuels.

### Exemple 2 : Fabrication des formulations

Diverses formulations polyamides sont fabriquées par mélange à l'état fondu en extrudeuse bi-vis type Werner et Pfleiderer ZSK 40 avec dégazage (L/D=36), des polymères décrits ci-dessus avec 25 % en poids d'Exxelor 1801 (copolymère éthylène-propylène greffé anhydride maléique) et 2 % en poids de stabilisant. Les paramètres d'extrusion sont les suivants : température d'extrusion avec un profil croissant 250-270°C ; vitesse de rotation de la vis : 250 tours par minute ; débit de la composition 40 kg/h ; le couple moteur et la puissance moteur absorbée varient selon les polyamides.

### Exemple 3 : Mesure des propriétés

Différentes propriétés mécaniques ont été mesurées sur les formulations de l'exemple 2, et les résultats sont mentionnés dans le tableau 2.

**Tableau 2**

| **Formulations** | **F4** | **F5** | **F6** |
|---|---|---|---|
| Polymère | 5 | 6 | 7 |
| Choc Charpy non-entaillé (kJ/m²) (2) | 98,7 | 101,5 | 100,1 |
| Force de tension (N/mm²) (3) | 41 | 42 | 43 |
| Allongement (%) (3) | 94 | 92 | 87 |
| Module de tension (N/mm²) (3) | 1500 | 1640 | 1670 |

| | | | |
|---|---|---|---|
| - (2) Choc Charpy entaillé est mesuré selon la norme ISO 179-1/1eA à une température de 23°C, la résistance à la traction. - (3) L'allongement et le module de tension sont mesurés selon la norme ISO 527 à une température de 23°C. | | | |

Au surplus, des essais on été effectués sur le comportement de la paraison de ces formulations. Cette mesure est obtenue en introduisant le polymère formulé dans une machine de soufflage mono vis à un profile de température de 250-275°C et à une vitesse de visse fixés de 40 tour par minute ; et en enregistrant à l'aide de photocellules le temps nécessaire pour permettre au paraison de polymère fondu de parcourir une distance de 30, 50 et 75 cm. La mesure est répétée au moins 5 fois afin de vérifier la faible déviation standard. Ainsi, plus le temps de parcourt est grand et plus le polymère présente une tenue morphologique avantageuse pour la fabrication d'articles par extrusion soufflage.

La résultats sont mentionnés dans le tableau 3.

**Tableau 3**

| **Formulation** | **Polymères** | **Distance (cm)** | **Temps (s)** |
|---|---|---|---|
| **FC1** | C1 | 0 | 0 |
| | | 30 | 19,7 |
| | | 50 | 28,64 |
| | | 75 | 36,96 |
| **FC2** | C2 | 0 | 0 |
| | | 30 | 20,34 |
| | | 50 | 28,02 |
| | | 75 | 34,46 |
| **FC3** | C3 | 0 | 0 |
| | | 30 | 22,02 |
| | | 50 | 30,18 |
| | | 75 | 37,2 |
| **F4** | 5 | 0 | 0 |
| | | 30 | 27,96 |
| | | 50 | 38,58 |
| | | 75 | 50,7 |
| **F5** | 6 | 0 | 0 |
| | | 30 | 26,9 |
| | | 50 | 38,08 |
| | | 75 | 48,26 |
| **F6** | 7 | 0 | 0 |
| | | 30 | 27,52 |
| | | 50 | 39,34 |
| | | 75 | 50,52 |

On observe ainsi que les formulations présentant les polymères selon l'invention présentent une paraison ayant un temps de parcours plus grand pour une même distance, par rapport à des polymères classiques de l'art antérieur. Les polymères selon l'invention présentent ainsi une bien meilleure aptitude à l'extrusion soufflage.

### Exemple 4 : Fabrication de formulations

Diverses formulations polyamides sont fabriquées par mélange à l'état fondu en extrudeuse bi-vis type Werner et Pfleiderer ZSK 40 avec dégazage (L/D=36), des polymères décrits ci-dessus avec 7,5 ou 15 % en poids d'Exxelor 1801, 15 % en poids de fibre de verre et 2 % en poids de stabilisant. Les paramètres d'extrusion sont les suivants : température d'extrusion avec un profil croissant 250-280°C ; vitesse de rotation de la vis : 250 tours par minute ; débit de la composition 40 kg/h ; le couple moteur et la puissance moteur absorbée varient selon les polyamides.

### Exemple 5 : Mesure des propriétés

Différentes propriétés mécaniques ont été mesurées sur les formulations de l'exemple 4, et les résultats sont mentionnés dans le tableau 4.

**Tableau 4**

| **Formulation** | **FC7** | **FC8** | **F9** | **F10** | **F11** | **F12** | **FC13** | **F14** |
|---|---|---|---|---|---|---|---|---|
| Polymère | C3 | C3 | 5 | 5 | 6 | 7 | C8 | 9 |
| Elastomères (%) | 15 | 7,5 | 15 | 7,5 | 15 | 15 | 15 | 15 |
| Choc Charpy non-entaillé (kJ/m²) (2) | 67,5 | 66,8 | 76,8 | 71,4 | 75,7 | 77,4 | 66,3 | 80,3 |
| Force de tension (N/mm²) (3) | 87 | 108 | 87 | 106 | 88 | 88 | 83 | 85 |
| Allongement (%) (3) | 5,5 | 4,5 | 6,6 | 4,8 | 6,4 | 6,2 | 4,8 | 7,9 |
| Module de tension (N/mm²) (3) | 4380 | 5430 | 4680 | 5450 | 4500 | 4780 | 4170 | 4390 |
| Viscosité en fondu (Pa.s) (4) | 858 | 597 | 1043 | 859 | 940 | 1311 | 754 | 903 |

| | | | | | | | | |
|---|---|---|---|---|---|---|---|---|
| - (4) Viscosité en fondu mesure selon la norme ISO11443 à une température de 280°C avec un cisaillement de 230 s⁻¹ | | | | | | | | |

On observe ainsi qu'un polymère branché (5) dans une formulation (F10) contenant moins d'élastomère présente une viscosité en fondu supérieure à une composition classique (FC13) comprenant un polymère linéaire (C8).

## Revendications

1. Polyamide branché obtenu par polymérisation en présence d'au moins :
- des monomères (a) diacides carboxyliques de type AA et des monomères diamines de type BB, ou leurs sels ;
- un composé multifonctionnel (b) comprenant au moins 3 fonctions A ou B ;
les fonctions A et B étant des fonctions susceptibles de réagir entre elles pour former une liaison amide ;
le polyamide obtenu présentant une différence en valeur absolue ΔGT entre ses groupements terminaux comprise entre 30 et 150 meq/kg ; et
le polyamide présentant un IV compris entre 150 et 300 mL/g selon la norme ISO 307.

2. Polyamide selon la revendication 1, **caractérisé en ce que** le monomère diacide carboxylique est un composé aliphatique ou aromatique ayant de 4 à 12 atomes de carbone, tels que l'acide adipique, l'acide téréphtalique, l'acide isophtalique, l'acide pimélique, l'acide subérique, l'acide décanedioïque, l'acide dodécanedioïque.

3. Polyamide selon la revendication 1 à 2, **caractérisé en ce que** le monomère diamine est un composé aliphatique, éventuellement cycloaliphatique, ou aromatique ayant de 4 à 12 atomes de carbone, tel que l'hexaméthylènediamine, la butanediamine, la m-xylylènediamine, l'isophoronediamine, la 3,3',5-triméthyl hexaméthylènediamine, et la méthylpentaméthylènediamine.

4. Polyamide selon l'une quelconque des revendications 1 à 3, **caractérisé en ce que** les monomères de polyamide utilisés sont l'acide adipique, l'hexaméthylènediamine, ou l'adipate d'hexaméthylènediammonium.

5. Polyamide selon l'une quelconque des revendications 1 à 4, **caractérisé en ce que** le polyamide est obtenu en ajoutant en outre un aminoacide ou un lactame.

6. Polyamide selon l'une quelconque des revendications 1 à 5, **caractérisé en ce que** le composé multifonctionnel (b) est un composé hydrocarboné comprenant de 1 à 100 atomes de carbone, aliphatique, cycloaliphatique et/ou aromatique et pouvant éventuellement comprendre un ou plusieurs hétéroatomes.

7. Polyamide selon l'une quelconque des revendications 1 à 6, **caractérisé en ce que** le composé multifonctionnel (b) est choisi dans le groupe comprenant : la 2,2,6,6-tétra-(β-carboxyéthyl)cyclohexanone, le diaminopropane - N,N,N',N' acide tétraacétique, l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

8. Polyamide selon l'une quelconque des revendications 1 à 6, **caractérisé en ce que** le composé multifonctionnel (b) est choisi dans le groupe comprenant : nitrilotrialkylamines, en particulier la nitrilotriéthylamine, les dialkylènetriamines, en particulier la diéthylènetriamine, la bishexaméthylènetriamine, les trialkylènetétramines et tétraalkylènepentamines, l'alkylène étant de préférence l'éthylène, la 4-aminométhyle-1,8,octanediamine, la mélamine, et les polyalkylèneamines.

9. Polyamide selon l'une quelconque des revendications 1 à 8, **caractérisé en ce que** le composé multifonctionnel (b) comprend 3 fonctions acides ou amines.

10. Polyamide selon l'une quelconque des revendications 1 à 9, **caractérisé en ce que** le composé multifonctionnel (b) comprend 3 fonctions amines.

11. Polyamide selon l'une quelconque des revendications 1 à 10, **caractérisé en ce qu'**il est obtenu par polymérisation en présence de 0,05 à 0,4 % molaire d'un composé multifonctionnel (b) comprenant au moins 3 fonctions A ou B, par rapport au nombre de moles de monomères constitutifs du polyamide.

12. Polyamide selon l'une quelconque des revendications 1 à 11, **caractérisé en ce qu'**il présente un indice de viscosité en solution compris entre 160 et 250, selon la norme ISO 307.

13. Procédé de polymérisation pour la fabrication d'un polyamide selon l'une quelconque des revendications 1 à 12, dans lequel on procède à la polymérisation d'un mélange comprenant au moins les monomères diacides carboxyliques et diamines, ou leurs sels, et le composé multifonctionnel (b).

14. Composition polyamide comprenant au moins un polyamide tel que décrit selon l'une quelconque des revendications 1 à 12 et des charges et/ou additifs.

15. Composition polyamide selon la revendication 14 comprenant au moins un agent modificateur du choc, comprenant éventuellement des groupements fonctionnels réactifs avec le polyamide.

16. Composition polyamide selon la revendication 14 ou 15, comprenant des particules d'agents modificateurs de chocs ayant une taille moyenne comprise entre 0,1 et 1 µm dans la matrice.

17. Composition polyamide selon l'une quelconque des revendications 14 à 16, comprenant des agents modificateurs du choc ayant des groupements fonctionnels réactifs avec le polyamide présentant un ΔGT de nature amine.

18. Composition polyamide selon l'une quelconque des revendications 14 à 17, comprenant des agents modificateurs du choc choisis dans le groupe comprenant : les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidile méthacrylate

19. Composition polyamide selon l'une quelconque des revendications 14 à 18, **caractérisée en ce que** la base du composé modificateur du choc est choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

20. Composition polyamide selon l'une quelconque des revendications 14 à 19, **caractérisée en ce que** les agent modificateurs de chocs comprennent également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyls notamment époxy, les esters glycidyls, les anhydrides notamment les anhydrides maléiques, les oxazolines, les maléïmides, ou leurs mélanges.

21. Composition polyamide selon l'une quelconque des revendications 14 à 20, **caractérisée en ce que** la proportion en poids des agents modificateurs du choc dans la composition totale est comprise entre 0,1 et 50 %, par rapport au poids total de la composition.

22. Procédé de fabrication d'articles par mise en oeuvre de compositions selon l'une quelconque des revendications 14 à 21 dans des dispositifs de moulage, de moulage par injection, d'extrusion notamment de feuilles ou de films, ou d'extrusion soufflage.

23. Procédé de soufflage par extrusion mettant en oeuvre une composition polyamide selon l'une quelconque des revendications 14 à 21 et au moins un agent modificateur du choc comprenant préférentiellement des groupements fonctionnels réactifs avec le polyamide.

## Patentansprüche

1. Verzweigtes Polyamid, erhalten durch Polymerisation in Gegenwart von mindestens:
- Dicarbonsäure-Monomeren (a) vom Typ AA und Diamin-Monomeren vom Typ BB oder Salzen davon;
- einer multifunktionellen Verbindung (b) mit mindestens 3 Funktionen A oder B;
wobei es sich bei den Funktionen A und B um Funktionen handelt, die miteinander unter Bildung einer Amidbildung reagieren können;
wobei das erhaltene Polyamid eine Absolutwert-Differenz ΔGT zwischen seinen Endgruppen zwischen 30 und 150 meq/kg aufweist und
wobei das Polyamid eine VZ zwischen 150 und 300 ml/g gemäß ISO-Norm 307 aufweist.

2. Polyamid nach Anspruch 1, **dadurch gekennzeichnet, dass** es sich bei dem Dicarbonsäure-Monomer um eine aliphatische oder aromatische Verbindung mit 4 bis 12 Kohlenstoffatomen, wie Adipinsäure, Terephthalsäure, Isophthalsäure, Pimelinsäure, Suberinsäure, Decandisäure und Dodecandisäure, handelt.

3. Polyamid nach Anspruch 1 bis 2, **dadurch gekennzeichnet, dass** es sich bei dem Diamin-Monomer um eine aliphatische, gegebenenfalls cycloaliphatische, oder aromatische Verbindung mit 4 bis 12 Kohlenstoffatomen, wie Hexamethylendiamin, Butandiamin, m-Xylylendiamin, Isophorondiamin, 3,3',5-Trimethylhexamethylendiamin und Methylpentamethylendiamin, handelt.

4. Polyamid nach einem der Ansprüche 1 bis 3, **dadurch gekennzeichnet, dass** es sich bei den verwendeten Polyamid-Monomeren um Adipinsäure, Hexamethylendiamin oder Hexamethylendiammoniumadipat handelt.

5. Polyamid nach einem der Ansprüche 1 bis 4, **dadurch gekennzeichnet, dass** das Polyamid durch zusätzliche Zugabe einer Aminosäure oder eines Lactams erhalten wird.

6. Polyamid nach einem der Ansprüche 1 bis 5, **dadurch gekennzeichnet, dass** es sich bei der multifunktionellen Verbindung (b) um eine aliphatische, cycloaliphatische und/oder aromatische Kohlenwasserstoffverbindung mit 1 bis 100 Kohlenstoffatomen und gegebenenfalls einem oder mehreren Heteroatomen handelt.

7. Polyamid nach einem der Ansprüche 1 bis 6, **dadurch gekennzeichnet, dass** die multifunktionelle Verbindung (b) aus der Gruppe umfassend 2,2,6,6-Tetrakis(β-carboxyethyl)cyclohexanon, Diaminopropan-N,N,N',N'-tetraessigsäure, 3,5,3',5'-Biphenyltetracarbonsäure, Säuren, die sich von Phthalocyanin und Naphthalocyanin ableiten, 3,5,3',5'-Biphenyltetracarbonsäure, 1,3,5,7-Naphthalintetracarbonsäure, 2,4,6-Pyridintricarbonsäure, 3,5,3',5'-Bipyridyltetracarbonsäure, 3,5,3',5'-Benzophenontetracarbonsäure, 1,3,6,8-Acridintetracarbonsäure, Trimesinsäure, 1,2,4,5-Benzoltetracarbonsäure und 2,4,6-Triaminocaprinsäure-1,3,5-triazin (TACT) ausgewählt ist.

8. Polyamid nach einem der Ansprüche 1 bis 6, **dadurch gekennzeichnet, dass** die multifunktionelle Verbindung (b) aus der Gruppe umfassend Nitrilotrialkylamine, insbesondere Nitrilotriethylamin, Dialkylentriamine, insbesondere Diethylentriamin, Bishexamethylentriamin, Trialkylentetramine und Tetraalkylenpentamine, wobei es sich bei dem Alkylen vorzugsweise um Ethylen handelt, 4-Aminomethyl-1,8-octandiamin, Melamin und Polyalkylenamine ausgewählt ist.

9. Polyamid nach einem der Ansprüche 1 bis 8, **dadurch gekennzeichnet, dass** die multifunktionelle Verbindung (b) 3 Säure- oder Aminfunktionen umfasst.

10. Polyamid nach einem der Ansprüche 1 bis 9, **dadurch gekennzeichnet, dass** die multifunktionelle Verbindung (b) 3 Aminfunktionen umfasst.

11. Polyamid nach einem der Ansprüche 1 bis 10, **dadurch gekennzeichnet, dass** es durch Polymerisation in Gegenwart von 0,05 bis 0,4 Mol-% einer multifunktionellen Verbindung (b) mit mindestens 3 Funktionen A oder B, bezogen auf die Zahl der Mole der Aufbaumonomere des Polyamids, erhalten wird.

12. Polyamid nach einem der Ansprüche 1 bis 11, **dadurch gekennzeichnet, dass** es eine Lösungsviskositätszahl zwischen 160 und 250 gemäß ISO-Norm 307 aufweist.

13. Polymerisationsverfahren zur Herstellung eines Polyamids nach einem der Ansprüche 1 bis 12, bei dem man eine Mischung, die mindestens Dicarbonsäure-Monomere und Diamin-Monomere oder Salze davon und die multifunktionelle Verbindung (b) umfasst, polymerisiert.

14. Polyamidzusammensetzung, umfassend mindestens ein Polyamid gemäß einem der Ansprüche 1 bis 12 und Füllstoffe und/oder Additive.

15. Polyamidzusammensetzung nach Anspruch 14, umfassend mindestens einen Schlagzähigkeitsmodifikator, der gegebenenfalls gegenüber dem Polyamid reaktive funktionelle Gruppen umfasst.

16. Polyamidzusammensetzung nach Anspruch 14 oder 15, umfassend Schlagzähigkeitsmodifikatorteilchen mit einer mittleren Größe zwischen 0,1 und 1 µm in der Matrix.

17. Polyamidzusammensetzung nach einem der Ansprüche 14 bis 16, umfassend Schlagzähigkeitsmodifikatoren mit gegenüber dem Polyamid, das eine ΔGT vom Amin-Typ aufweist, reaktiven funktionellen Gruppen.

18. Polyamidzusammensetzung nach einem der Ansprüche 14 bis 17, umfassend Schlagzähigkeitsmodifikatoren aus der Gruppe umfassend: Schlagzähigkeitsmodifikatoren, bei denen es sich um oligomere oder polymere Verbindungen handelt, die mindestens eines der folgenden Monomere oder eine Mischung davon umfassen: Ethylen, Propylen, Buten, Isopren, Dien, Acrylat, Butadien, Styrol, Octen, Acrylnitril, Acrylsäure, Methacrylsäure, Vinylacetat, Vinylester wie Acrylsäure- und Methacrylsäureester und Glycidylmethacrylat.

19. Polyamidzusammensetzung nach einem der Ansprüche 14 bis 18, **dadurch gekennzeichnet, dass** die Grundlage der Schlagzähigkeitsmodifikatorverbindung ausgewählt ist aus der Gruppe umfassend: Polyethylene, Polypropylene, Polybutene, Polyisoprene, Ethylen-Propylen-Kautschuke (EPR), Ethylen-Propylen-Dien-Kautschuke (EPDM), Ethylen-Buten-Kautschuke, Ethylen-Acrylat-Kautschuke, Butadien-Styrol-Kautschuke, Butadien-Acrylat-Kautschuke, Ethylen-Octen-Kautschuke, Butadien-Acrylnitril-Kautschuke, Ethylen-Acrylsäure-Copolymere (EAA), Ethylen-Vinyl-Acetat-Copolymere (EVA), Ethylen-Acrylsäureester-Copolymere (EEA), Acrylnitril-Butadien-Styrol-Copolymere (ABS), Styrol-Ethylen-Butadien-Styrol-Blockcopolymere (SEBS), Styrol-Butadien-Styrol-Copolymere (SBS), Kern-Schale-Elastomere vom Methacrylat-Butadien-Styrol(MBS)-Typ oder Mischungen von mindestens zwei oben aufgeführten Elastomeren.

20. Polyamidzusammensetzung nach einem der Ansprüche 14 bis 19, **dadurch gekennzeichnet, dass** die Schlagzähigkeitsmodifikatoren außerdem funktionelle Gruppen, die gegenüber dem Polyamid reaktiv sind, umfassen, im Allgemeinen gepfropft oder copolymerisiert, wie insbesondere die folgenden funktionellen Gruppen: Säuren, wie Carbonsäuren, versalzte Säuren, insbesondere Ester, Acrylate und Methacrylate, Ionomere, Glycidylgruppen, insbesondere Epoxidgruppen, Glycidylester, Anhydride, insbesondere Maleinsäureanhydride, Oxazoline, Maleinimide oder Mischungen davon.

21. Polyamidzusammensetzung nach einem der Ansprüche 14 bis 20, **dadurch gekennzeichnet, dass** der Gewichtsanteil von Schlagzähigkeitsmodifikatoren in der gesamten Zusammensetzung zwischen 0,1 und 50%, bezogen auf das Gesamtgewicht der Zusammensetzung, beträgt.

22. Verfahren zur Herstellung von Gegenständen durch Verwendung von Zusammensetzungen nach einem der Ansprüche 14 bis 21 in Formwerkzeugen, Spritzgusswerkzeugen, Extrusionswerkzeugen, insbesondere Platten- oder Folienextrusionswerkzeugen, oder Extrusionsblaswerkzeugen.

23. Extrusionsblasverfahren unter Verwendung einer Polyamidzusammensetzung nach einem der Ansprüche 14 bis 21 und mindestens eines Schlagzähigkeits modifikators, der vorzugsweise gegenüber dem Polyamid reaktive funktionelle Gruppen umfasst.

## Claims

1. Branched polyamide obtained by polymerization in the presence of at least:
- dicarboxylic acid monomers (a) of the type AA and diamine monomers of the type BB, or salts thereof;
- a multifunctional compound (b) comprising at least 3 functions A or B;
the functions A and B being functions that are capable of reacting together to form an amide bond;
the polyamide obtained having a difference in absolute value ΔGT between its end groups of between 30 and 150 meq/kg; and
the polyamide having a VN of between 150 and 300 ml/g according to standard ISO 307.

2. Polyamide according to Claim 1, **characterized in that** the dicarboxylic acid monomer is an aliphatic or aromatic compound containing from 4 to 12 carbon atoms, such as adipic acid, terephthalic acid, isophthalic acid, pimelic acid, suberic acid, decanedioic acid or dodecanedioic acid.

3. Polyamide according to Claim 1 or 2, **characterized in that** the diamine monomer is an aliphatic, optionally cycloaliphatic, or aromatic compound containing from 4 to 12 carbon atoms, such as hexamethylenediamine, butanediamine, m-xylylenediamine, isophoronediamine, 3,3',5-trimethylhexamethylenediamine and methylpentamethylenediamine.

4. Polyamide according to any one of Claims 1 to 3, **characterized in that** the polyamide monomers used are adipic acid, hexamethylenediamine or hexamethylenediammonium adipate.

5. Polyamide according to any one of Claims 1 to 4, **characterized in that** the polyamide is obtained by also adding an amino acid or a lactam.

6. Polyamide according to any one of Claims 1 to 5, **characterized in that** the multifunctional compound (b) is an aliphatic, cycloaliphatic and/or aromatic hydrocarbon-based compound comprising from 1 to 100 carbon atoms and possibly comprising one or more heteroatoms.

7. Polyamide according to any one of Claims 1 to 6, **characterized in that** the multifunctional compound (b) is chosen from the group comprising: 2,2,6,6-tetrakis(β-carboxyethyl)cyclohexanone, diaminopropane-N,N,N',N'-tetraacetic acid, 3,5,3',5'-biphenyltetracarboxylic acid, acids derived from phthalocyanine and naphthalocyanine, 3,5,3',5'-biphenyltetracarboxylic acid, 1,3,5,7-naphthalenetetracarboxylic acid, 2,4,6-pyridinetricarboxylic acid, 3,5,3',5'-bipyridyltetracarboxylic acid, 3,5,3',5'-benzophenonetetracarboxylic acid, 1,3,6,8-acridinetetracarboxylic acid, trimesic acid, 1,2,4,5-benzenetetracarboxylic acid and 2,4,6-triaminocaproic acid-1,3,5-triazine (TACT).

8. Polyamide according to any one of Claims 1 to 6, **characterized in that** the multifunctional compound (b) is chosen from the group comprising: nitrilotrialkylamines, in particular nitrilotriethylamine, dialkylenetriamines, in particular diethylenetriamine, bishexamethylenetriamine, trialkylenetetramines and tetraalkylenepentamines, the alkylene preferably being ethylene, 4-aminomethyl-1,8-octanediamine, melamine, and polyalkyleneamines.

9. Polyamide according to any one of Claims 1 to 8, **characterized in that** the multifunctional compound (b) comprises 3 acid or amine functions.

10. Polyamide according to any one of Claims 1 to 9, **characterized in that** the monofunctional compound (b) comprises 3 amine functions.

11. Polyamide according to any one of Claims 1 to 10, **characterized in that** it is obtained by polymerization in the presence of 0.05 mol% to 0.4 mol% of a monofunctional compound (b) comprising at least 3 functions A or B, relative to the number of moles of constituent monomers of the polyamide.

12. Polyamide according to any one of Claims 1 to 11, **characterized in that** it has a solution viscosity number of between 160 and 250, according to standard ISO 307.

13. Polymerization process for the manufacture of a polyamide according to any one of Claims 1 to 12, wherein a mixture comprising at least the dicarboxylic acid and diamine monomers, or salts thereof, and the multifunctional compound (b) is polymerized.

14. Polyamide composition comprising at least one polyamide as described in any one of Claims 1 to 12, and fillers and/or additives.

15. Polyamide composition according to Claim 14, comprising at least one impact modifier, optionally comprising functional groups that are reactive with the polyamide.

16. Polyamide composition according to Claim 14 or 15, comprising particles of impact modifiers having a mean size between 0.1 and 1 µm in the matrix.

17. Polyamide composition according to any one of Claims 14 to 16, comprising impact modifiers having functional groups that are reactive with the polyamide having a ΔGT of amine nature.

18. Polyamide composition according to any one of Claims 14 to 17, comprising impact modifiers chosen from the group comprising: impact modifiers that are oligomeric or polymeric compounds comprising at least one of the following monomers, or a mixture thereof: ethylene, propylene, butene, isoprene, diene, acrylate, butadiene, styrene, octene, acrylonitrile, acrylic acid, methacrylic acid, vinyl acetate, vinyl esters such as acrylic and methacrylic esters and glycidyl methacrylate.

19. Polyamide composition according to any one of Claims 14 to 18, **characterized in that** the base of the impact modifier compound is chosen from the group comprising: polyethylenes, polypropylenes, polybutenes, polyisoprenes, ethylene-propylene rubbers (EPRs), ethylene-propylene-diene rubbers (EPDMs), ethylene-butene rubbers, ethylene-acrylate rubbers, butadiene-styrene rubbers, butadiene-acrylate rubbers, ethylene-octene rubbers, butadiene-acrylonitrile rubbers, ethylene-acrylic acid (EAA) copolymers, ethylene-vinyl acetate (EVA) copolymers, ethylene-acrylic ester (EEA) copolymers, acrylonitrile-butadiene-styrene (ABS) copolymers, styrene-ethylene-butadiene-styrene (SEBS) block copolymers, styrene-butadiene-styrene (SBS) copolymers, core-shell elastomers of methacrylate-butadiene-styrene (MBS) type, or mixtures of at least two elastomers listed above.

20. Polyamide composition according to any one of Claims 14 to 19, **characterized in that** the impact modifiers also comprise, generally grafted or copolymerized, functional groups that are reactive with the polyamide, such as the following functional groups especially: acids, such as carboxylic acids, salified acids, esters in particular, acrylates and methacrylates, ionomers, glycidyl groups especially epoxy groups, glycidyl esters, anhydrides especially maleic anhydrides, oxazolines, maleimides, or mixtures thereof.

21. Polyamide composition according to any one of Claims 14 to 20, **characterized in that** the proportion, by weight, of impact modifiers in the total composition is between 0.1% and 50%, relative to the total weight of the composition.

22. Process for manufacturing articles by using compositions according to any one of Claims 14 to 21, in moulding devices, injection moulding devices, extrusion devices, especially sheet or film extrusion devices, or extrusion blow moulding devices.

23. Extrusion blow moulding process using a polyamide composition according to any one of Claims 14 to 21 and at least one impact modifier preferably comprising functional groups that are reactive with the polyamide.
